# EUROPEAN PATENT APPLICATION

(11) **EP 4 620 668 A1**
(43) Date of publication of application: **24.09.2025**
(21) Application number: 23738414.4
(22) Date of filing: 13.02.2023
(51) Int. Cl.: B32B 27/02

(54) **FABRIC STRUCTURE AND MANUFACTURING METHOD THEREFOR**

(30) Priority: 17.11.2022 CN 202211440987
(71) Applicant: Taya Canvas (Shanghai) Company Ltd, Shanghai 201501 (CN)
(72) Inventor: LIN, I-Chien, Shanghai 201501 (CN)
(74) Representative: Becker, Eberhard
(86) International application number: PCT/CN2023/075566
(87) International publication number: WO 2024/103545

(57) **Abstract**

The disclosure provides a fabric structure, which includes a base fabric and a coating layer. The base fabric is woven from multiple yarns. Each of the yarns is composed of a fiber. The coating layer is disposed on the base fabric. The fiber and the coating layer do not include polyvinyl chloride. A manufacturing method of the fabric structure is also provided.

## Description

### Technical Field

The disclosure relates to a fabric structure and a manufacturing method thereof.

### Description of Related Art

Polyvinylchloride (PVC) is a plastic containing chlorine, so PVC is referred to as "toxic plastic" by Greenpeace International. In addition, due to the poor stability of PVC, it is often necessary to add additives such as plasticizers, stabilizers, and/or stabilizing agents that are harmful to the environment in PVC products. For example, in order to prevent the PVC products with poor thermal stability from cracking under the sun or high temperature, the stabilizing agents including heavy metal such as lead, cadmium, and zinc must be added.

On the other hand, in order to have a waterproof function, a coating layer is often formed on the surface of the base fabric of the fabric. However, due to factors such as structural weaving and material properties, the coating layer may not be easily adhered to the surface of the base fabric, and its own material also has limitations (such as insufficient softness), so when bent or collided, the coating layer may be easily damaged or peeled off at the bend, and the fabric loses the waterproof function.

### SUMMARY

The disclosure provides a fabric structure and a manufacturing method thereof, which can reduce the probability of delamination of a coating layer while conforming to the trend of environmental protection.

A fabric structure of the disclosure includes a base fabric and a coating layer. The base fabric is woven from multiple yarns. Each yarn is composed of a fiber. The coating layer is disposed on the base fabric. The fiber and the coating layer do not include polyvinyl chloride.

In an embodiment of the disclosure, the fiber includes polypropylene, polyethylene terephthalate, or a combination thereof.

In an embodiment of the disclosure, the coating layer includes a polymer, a flame retardant, an auxiliary, or a combination thereof.

In an embodiment of the disclosure, the polymer includes polypropylene, low density polyethylene, polyolefin elastomer, ethylene-vinyl acetate copolymer, polymer polyol, or a combination thereof.

In an embodiment of the disclosure, the flame retardant includes a brominated flame retardant, a halogen-free flame retardant, a metal compound flame retardant, or a combination thereof.

In an embodiment of the disclosure, the auxiliary includes alumina hydrate, aluminum sulfate, aluminum hydroxide, silicon dioxide, or a combination thereof.

In an embodiment of the disclosure, the base fabric is not a sheet-like woven structure.

In an embodiment of the disclosure, the base fabric is a white base fabric, a checkered base fabric, or a black base fabric.

A manufacturing method of a fabric structure of the disclosure includes: manufacturing multiple yarns into a base fabric through a spinning process, wherein each of the yarns is composed of a fiber; and forming a coating layer on the base fabric, wherein the fiber and the coating layer do not include polyvinyl chloride.

In an embodiment of the disclosure, the step of forming the coating layer includes: performing a granulation process to form multiple particles; and melting to form the particles on the base fabric.

Based on the, the disclosure improves the weaving method of the base fabric, so that the base fabric is woven from the yarns composed of the fibers. In this way, the coating layer disposed on the base fabric may be effectively prevented from falling off, and since the fibers of the base fabric and the coating layer do not include polyvinyl chloride, the fabric structure is an environmentally friendly fabric structure, so the probability of delamination of the coating layer can be reduced while conforming to the trend of environmental protection.

In order for the features and advantages of the disclosure to be more comprehensible, the following specific embodiments are described in detail in conjunction with the drawings.

### BRIEF DESCRIPTION OF THE DRAWINGS

FIG. 1A is a schematic diagram of a base fabric according to an embodiment of the disclosure.
FIG. 1B is a schematic diagram of a fabric structure according to an embodiment of the disclosure.
FIG. 2A, FIG. 2B, and FIG. 2C are schematic diagrams of a manufacturing method of a fabric structure in the prior art.

### DETAILED DESCRIPTION OF DISCLOSED EMBODIMENTS

Reference will now be made in detail to the exemplary embodiments of the disclosure, and examples of the exemplary embodiments are illustrated in the drawings. Wherever possible, the same reference numerals are used in the drawings and the description to refer to the same or similar parts.

Embodiments of the disclosure are explained in detail below. However, the embodiments are exemplary, the disclosure is not limited thereto, and the disclosure is defined by the scope of the claims.

Exemplary embodiments of the disclosure will be fully described below with reference to the drawings, but the invention may also be implemented in many different forms and should not be construed as limited to the embodiments described herein. In the drawings, for the sake of clarity, sizes and thicknesses of various regions, parts, and layers may not be drawn in actual scale. In order to facilitate understanding, the same elements in the following description will be described with the same reference numerals.

Directional terms (for example, up, down, right, left, front, back, top, and bottom) used herein are used only with reference to the drawings and are not intended to imply absolute orientations.

Unless otherwise defined, all terms (including technical and scientific terms) used herein have the same meanings as commonly understood by persons skilled in the art to which the disclosure belongs.

Unless otherwise defined, all terms (including technical terms and scientific terms) used herein have the same meanings as commonly understood by persons skilled in the technical field to which the disclosure belongs. It will also be understood that terms (such as those defined in commonly used dictionaries) should be construed to have meanings consistent with the meanings in the relevant technical context and should not be interpreted in an idealized or overly formal sense, unless expressly defined as such.

Herein, a range indicated by "from a value to another value" is a general representation which avoids listing all values in the range one by one in the specification. Therefore, the recitation of a specific numerical range covers any value within the numerical range and a smaller numerical range bounded by any values within the numerical range, as if the arbitrary value and the smaller numerical range are written in the specification.

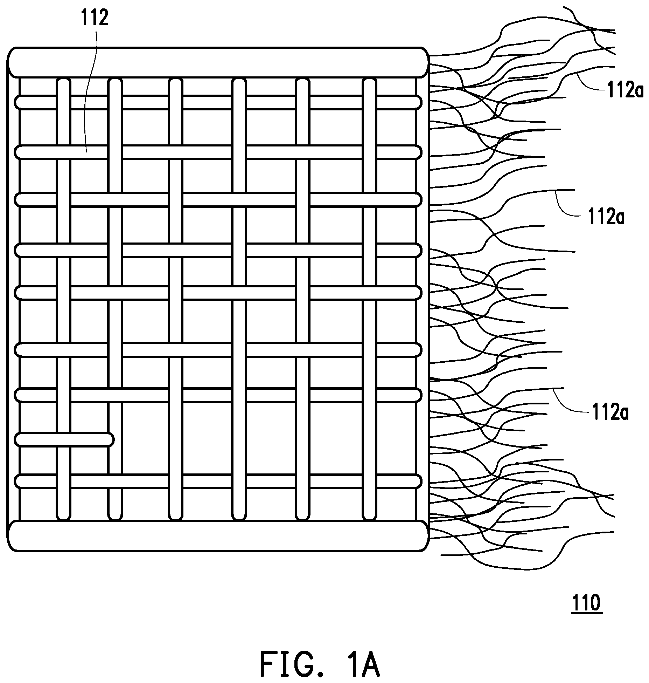

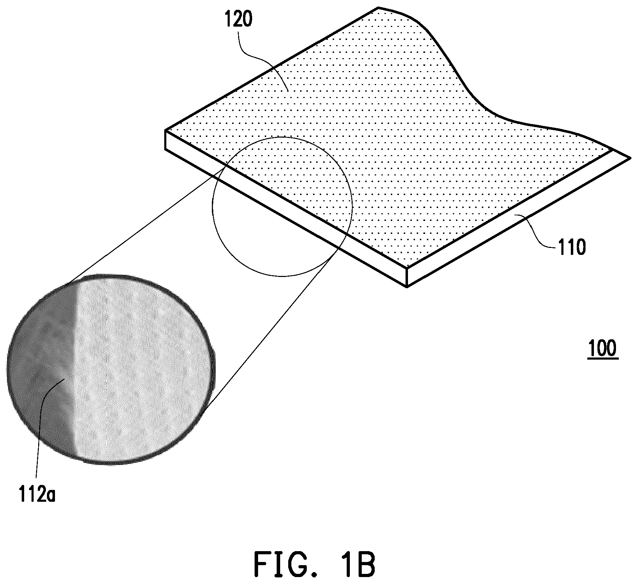

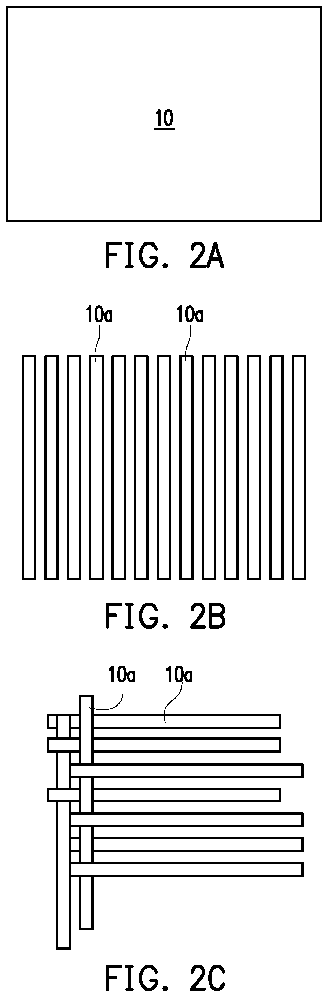

FIG. 1A is a schematic diagram of a base fabric according to an embodiment of the disclosure. FIG. 1B is a schematic diagram of a fabric structure according to an embodiment of the disclosure. FIG. 2A, FIG. 2B, and FIG. 2C are schematic diagrams of a manufacturing method of a fabric structure in the prior art. Please refer to FIG. 1A and FIG. 1B. A fabric structure 100 of the embodiment includes a base fabric 110 and a coating layer 120, wherein the coating layer 120 is disposed on the base fabric 110. In addition, the embodiment improves the weaving method of the base fabric 110, so that the base fabric 110 is woven from multiple yarns 112 composed of fibers 112a. In this way, the coating layer 120 disposed on the base fabric 110 is not easy to fall off, and since the fibers 112a of the base fabric 110 and the coating layer 120 do not include polyvinyl chloride (PVC), the fabric structure is an environmentally friendly fabric structure, so the fabric structure can reduce the probability of delamination of the coating layer 120 while conforming to the trend of environmental protection.

Further, please refer to FIG. 2A, FIG. 2B, and FIG. 2C. In the prior art, a polymer material is first calendered into a membrane 10, the membrane 10 is then cut into multiple parts 10a (for example, multiple rectangular strip-like structures), and warp and weft interlacing weaving is finally performed to form a base fabric. The adhesion of a coating layer formed on the base fabric by such sheet-like weaving method is not high, and the coating layer may easily fall off to lose the waterproof function. Accordingly, compared with the prior art, the base fabric 110 of the embodiment is not a sheet-like woven structure, but a relatively compact machine woven or knitted structure (the edge of the base fabric 110 may have the fibers 112a as shown in the enlarged part of FIG. 1B to represent a non-sheet-like woven structure). Therefore, the adhesion between the coating layer 120 and the base fabric 110 can be effectively increased to improve the delamination phenomenon of the coating layer 120, but the disclosure is not limited thereto.

In some embodiments, the fiber 112a includes polypropylene (PP), polyethylene terephthalate (polyester, PET), or a combination thereof, so the fabric structure 100 of the embodiment does not include polyvinyl chloride and can achieve properties such as good strength and light weight while meeting the requirement of environmental protection, but the disclosure is not limited thereto.

In some embodiments, the coating layer 120 includes a polymer, a flame retardant, an auxiliary, or a combination thereof, wherein the flame retardant may enable the fabric structure 100 to have a flame-retardant function, and the auxiliary may improve the whiteness of the fabric structure 100 or have other functionality. Here, the flame retardant and the auxiliary are optional, that is, the flame retardant and the auxiliary may be selected to be added or not added according to actual design requirements.

In some embodiments, the proportion of the polymer used is between 50 weight percent (wt%) to 100wt% (for example, 50wt%, 60wt%, 70wt%, 80wt%, 90wt%, 100wt%, or any value between 50wt% and 100wt%); the proportion of the flame retardant used is between Owt% and 20wt% (for example, 0wt%, 5wt%, 10wt%, 15wt%, 20wt%, or any value between Owt% and 20wt%); and the proportion of the auxiliary used is between Owt% and 1wt% (for example, 0wt%, 0.2wt%, 0.4wt%, 0.6wt%, 0.8wt%, 1wt%, or any value between Owt% and 1wt%), but the disclosure is not limited thereto.

In some embodiments, the polymer of the coating layer 120 may include polypropylene (PP), low density polyethylene (HP-LDPE LDPE), polyolefin elastomers (POE), ethylene-vinyl acetate copolymer (EVA), polymer polyol (POP), or a combination thereof. Here, according to actual design requirements, one type may be used alone or at least two or more types may be used for mixing for the polymer, so the selection of the material of the coating layer 120 has greater flexibility. The relevant properties of the polymer will be further described below. However, it should be noted that the descriptions are not intended to limit the disclosure, as long as the polymer is in a form well known to persons skilled in the art, the polymer belongs to the protection scope of the disclosure.

### <Polypropylene>

Polypropylene may be a polymer formed through polyaddition reaction of propylene and is a white waxy material with a transparent and light appearance. The chemical formula is (C₃H₆)n, the density is 0.89 g/cm³ to 0.91 g/cm³, flammable, the melting point is 189°C (softens at around 155°C), and the service temperature range is -30°C to 140°C. In addition, polypropylene can resist the corrosion of acid, alkali, salt solution, and various organic solvents below 80°C and can be decomposed under high temperature and oxidation.

### <Low density polyethylene>

Low density polyethylene may be polyethylene with high pressure and low density, a lighter variety of polyethylene resin, in the form of milky white, tasteless, odorless, non-toxic, matte waxy particles. Low density polyethylene has good flexibility, extensibility, electrical insulation, transparency, easy processing, and certain air permeability, and the chemical stability is good. Low density polyethylene is resistant to alkali and general organic solvents.

### <Polyolefin elastomer>

Polyolefin elastomer may be a copolymer of ethylene and octene, wherein the content of comonomer octene (C₈H₁₆) may be 20% to 30%. The existence of octene in the molecular structure destroys the crystallization of ethylene, but also endows the copolymer with excellent transparency and good elasticity at the same time, and the crystallization of ethylene acts as a physical crosslinking point at room temperature and the crystallization of ethylene enables the copolymer to have plasticity at high temperature. In addition, the narrow molecular weight distribution enables POE to have higher tensile strength, impact resistance, etc. On the other hand, due to the branching effect of octene, the heat sensitivity of the copolymer is greatly improved, which greatly enhances the processability of the polymer.

In some embodiments, polyolefin elastomer (POE) is a thermoplastic elastomer in-situ polymerized with ethylene and alpha-olefins adopting a metallocene catalyst, wherein a crystalline region (resin phase) of a polyethylene chain acts as a physical crosslinking point and has typical plastic properties. After adding a certain amount of α-olefin (1-butene, 1-hexene, 1-octene, etc.), the crystalline region of the polyethylene chain is weakened to form an amorphous region (rubber phase) that exhibits rubber elasticity, so that the product has the properties of an elastomer. Therefore, POE has excellent comprehensive performance of the dual properties of plastic and rubber to be regarded as a bridge product of plastic and rubber.

### <Ethylene-vinyl acetate copolymer>

Ethylene-vinyl acetate copolymer may be a general-purpose high molecular polymer, the molecular formula is (C₂H₄)ₓ.(C₄H₆O₂)_{y} (as shown in Formula (1)), flammable, and the burning smell is non-irritating. EVA has better weather resistance and aging resistance than a PE material. In addition, the VA content may affect the resin properties of EVA. For example, when the VA content is 10% to 20%, EVA is a plastic material; and when the VA content exceeds 30%, EVA is an elastic material, and when the VA content increases, the resilience, the flexibility, the transparency, the solubility, the stress cracking resistance, the impact performance, and the adhesiveness of the EVA material all increase accordingly, but the disclosure does not limit the VA content, which may be selected according to actual design requirements. On the other hand, since the EA side chain is a polar group, the content increases, the solubility increases, the chemical resistance deteriorates, the polarity increases, and the bonding and the bonding strength with a substrate are improved. In some embodiments, when the EVA content increases, the rigidity, the wear resistance, and the electrical insulation of EVA are weakened.

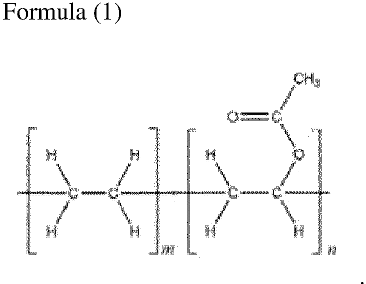

### <Polyol>

Polyol may be p-octylphenol, that is, 4-octylphenol 4-n-octylphenol, which is a chemical industrial product and is widely used to produce oil-soluble phenolic resin surfactant binder, etc.

In some embodiments, the polymer may be blended using two materials, such as polypropylene with low density polyethylene, polypropylene with polyolefin elastomer, polypropylene with ethylene-vinyl acetate copolymer, and polypropylene with polyol, wherein the ratio range of the above matches may be between 18:61 and 61:18, but the disclosure is not limited thereto. The polymer used and the ratio may be determined according to actual design requirements.

In some embodiments, the flame retardant may include a brominated flame retardant, a halogen-free flame retardant, a metal compound flame retardant, or a combination thereof. For example, the brominated flame retardant includes 1,2,4,5-tetrabromo-3,6-bis(bromomethyl)benzene, bis(pentabromophenyl)ethane (DBDPE), and polybrominated diphenyl ether (PBDE). The halogen-free flame retardant is, for example, phosphorus nitrogen-based halogen-free flame retardant or other suitable halogen-free flame retardants, wherein the halogen-free flame retardant includes ammonium polyphosphate, melamine, expanded graphite, and melamine phosphate. The metal compound flame retardant includes antimony trioxide, but the disclosure is not limited thereto. Here, bis(pentabromophenyl)ethane is an environmentally friendly flame retardant, and polybrominated diphenyl ether is, for example, decabromodiphenyl ether (DecaBDE).

In some embodiments, the auxiliary may include alumina hydrate (automatic throttle, ATH), aluminum sulfate, aluminum hydroxide, silicon dioxide, or a combination thereof, but the disclosure is not limited thereto. Here, the auxiliary may be used as a filler and may also be used as a raw material to meet special whiteness requirements using aluminum sulfate, aluminum hydroxide, etc.

In some embodiments, the base fabric 100 is a white base fabric, a checkered base fabric, or a black base fabric, and the base fabric structure 100 may be a woven fabric or a knitting fabric, but the disclosure is not limited thereto.

In some embodiments, the fabric structure 100 is a canvas and is applied to a tarpaulin, a truck cover, a tent, an industrial fabric, but the disclosure is not limited thereto.

The main flow of a manufacturing method of a fabric structure according to an embodiment of the disclosure will be further described below.

First, yarns are manufactured into a base fabric through a spinning process, wherein each yarn is composed of fibers, and the fibers do not include polyvinyl chloride. Furthermore, a hand spinning machine using a flyer and a bobbin may be used, so that drawing, twisting, and winding actions are continuously and simultaneously performed to form the textile base fabric.

Next, a coating layer is formed on the base fabric, wherein the step of forming the coating layer may include performing a granulation process (which may enable polymer mixing to be more uniform) to form multiple particles, and then melting to form the particles on the base fabric. Further, a polymer, a flame retardant, and/or an auxiliary may be mixed and granulated to form the particles, and the granulated particles are melted at high temperature to reach a glass transition temperature (Tg), so that the particles have fluidity. Then, a coating machine is used to extrude and cast (such as extruding from a flat die in a streamlined molten state). After stretching, a coating material is attached to the surface of the base fabric, cooled, shaped, and pressed to form the coating layer with functional properties such as the barrier property, the heat sealing property, and strength and toughness, but the disclosure is not limited thereto.

In some embodiments, the melting temperature is, for example, 110°C to 200°C (preferably about 170°C), but the disclosure is not limited thereto. Different polymers correspond to different melting temperatures.

In some embodiments, the thickness of the coating layer may be adjusted through a machine gap during extrusion. For example, the thickness may fall within 0.1 mm to 0.2 mm, but the disclosure is not limited thereto.

Table 1 and Table 2 below provide the specific composition and corresponding data of the fabric structure of the disclosure, so the fabric structure of the disclosure may indeed be implemented accordingly. However, the data are illustrative and the disclosure is not limited to the embodiments. Here, the tensile strength and the tear resistance in Table 1 and Table 2 are tested through a tensile testing machine, and Table 2 shows the formula proportion of the coating layer in unit wt%.

**Table 1**

| Item | Unit | White base fabric (PP) | Checkered base fabric (PP) | Black base fabric (PP) |
|---|---|---|---|---|
| Tensile strength | Kg/5cm | 280.8/253.3 | 231.3/178.3 | 307.2/238.8 |
| Tear resistance | KG | 33.3/32.6 | 25.2/16.9 | 42.7/33.2 |

**Table 2**

| | PP | PE | LDPE | POE | EVA | POP | Flame retardant (DBDPE) | Auxiliary (aluminum hydroxide) | Base fabric material | Tensile strength (Kg/5cm) | Tear resistance (Kg) |
|---|---|---|---|---|---|---|---|---|---|---|---|
| Embodiment 1 | 100 | 0 | 0 | 0 | 0 | 0 | 0 | 0 | PP | 250 | 25 |
| Embodiment 2 | 0 | 100 | 0 | 0 | 0 | 0 | 0 | 0 | PP | 230 | 18 |
| Embodiment 3 | 0 | 0 | 100 | 0 | 0 | 0 | 0 | 0 | PP | 225 | 20 |
| Embodiment 4 | 0 | 0 | 0 | 100 | 0 | 0 | 0 | 0 | PP | 217 | 31 |
| Embodiment 5 | 0 | 0 | 0 | 0 | 100 | 0 | 0 | 0 | PP | 178 | 36 |
| Embodiment 6 | 0 | 0 | 0 | 0 | 0 | 100 | 0 | 0 | PP | 186 | 27 |
| Embodiment 7 | 50 | 34 | 0 | 0 | 0 | 0 | 15 | 1 | PP | 307 | 34 |
| Embodiment 8 | 34 | 50 | 0 | 0 | 0 | 0 | 15 | 1 | PP | 280 | 30 |
| Embodiment 9 | 50 | 0 | 34 | 0 | 0 | 0 | 15 | 1 | PP | 291 | 28 |
| Embodiment 10 | 50 | 0 | 0 | 34 | 0 | 0 | 15 | 1 | PP | 209 | 22 |
| Embodiment 11 | 50 | 0 | 0 | 0 | 34 | 0 | 15 | 1 | PP | 226 | 26 |
| Embodiment 12 | 50 | 0 | 0 | 0 | 0 | 34 | 15 | 1 | PP | 187 | 18 |
| Embodiment 13 | 0 | 50 | 34 | 0 | 0 | 0 | 15 | 1 | PP | 220 | 29 |
| Embodiment 14 | 0 | 50 | 0 | 34 | 0 | 0 | 15 | 1 | PP | 217 | 31 |
| Embodiment 15 | 0 | 50 | 0 | 0 | 34 | 0 | 15 | 1 | PP | 178 | 24 |
| Embodiment 16 | 0 | 50 | 0 | 0 | 0 | 34 | 15 | 1 | PP | 196 | 30 |
| Embodiment 17 | 50 | 29 | 0 | 0 | 0 | 0 | 20 | 1 | PP | 287 | 42 |
| Embodiment 18 | 29 | 50 | 0 | 0 | 0 | 0 | 20 | 1 | PP | 265 | 38 |
| Embodiment 19 | 50 | 0 | 29 | 0 | 0 | 0 | 20 | 1 | PP | 233 | 35 |
| Embodiment 20 | 50 | 0 | 0 | 29 | 0 | 0 | 20 | 1 | PP | 227 | 28 |
| Embodiment 21 | 50 | 0 | 0 | 0 | 29 | 0 | 20 | 1 | PP | 206 | 33 |
| Embodiment 22 | 50 | 0 | 0 | 0 | 0 | 29 | 20 | 1 | PP | 176 | 27 |
| Embodiment 23 | 0 | 50 | 29 | 0 | 0 | 0 | 20 | 1 | PP | 224 | 32 |
| Embodiment 24 | 0 | 50 | 0 | 29 | 0 | 0 | 20 | 1 | PP | 236 | 34 |
| Embodiment 25 | 0 | 50 | 0 | 0 | 29 | 0 | 20 | 1 | PP | 208 | 26 |
| Embodiment 26 | 0 | 50 | 0 | 0 | 0 | 29 | 20 | 1 | PP | 215 | 38 |

In summary, the disclosure improves the weaving method of the base fabric, so that the base fabric is woven from the yarns composed of the fibers. In this way, the coating layer disposed on the base fabric may be effectively prevented from falling off, and since the fibers of the base fabric and the coating layer do not include polyvinyl chloride, the fabric structure is an environmentally friendly fabric structure, so the probability of delamination of the coating layer can be reduced while conforming to the trend of environmental protection.

Finally, it should be noted that the embodiments are only used to illustrate, but not to limit, the technical solutions of the disclosure. Although the disclosure has been described in detail with reference to the embodiments, persons skilled in the art should understand that the technical solutions described in the embodiments may still be modified or some or all of the technical features thereof may be equivalently replaced. However, the modifications or replacements do not cause the essence of the corresponding technical solutions to deviate from the scope of the technical solutions of the embodiments of the disclosure.

## Claims

1. A fabric structure, comprising:
a base fabric, woven from a plurality of yarns, wherein each of the yarns is composed of a fiber; and
a coating layer, disposed on the base fabric, wherein the fiber and the coating layer do not comprise polyvinyl chloride.

2. The fabric structure according to claim 1, wherein the fiber comprises polypropylene, polyethylene terephthalate, or a combination thereof.

3. The fabric structure according to claim 1, wherein the coating layer comprises a polymer, a flame retardant, an auxiliary, or a combination thereof.

4. The fabric structure according to claim 3, wherein the polymer comprises polypropylene, low density polyethylene, polyolefin elastomer, ethylene-vinyl acetate copolymer, polymer polyol, or a combination thereof.

5. The fabric structure according to claim 3, wherein the flame retardant comprises a brominated flame retardant, a halogen-free flame retardant, a metal compound flame retardant, or a combination thereof.

6. The fabric structure according to claim 3, wherein the auxiliary comprises alumina hydrate, aluminum sulfate, aluminum hydroxide, silicon dioxide, or a combination thereof.

7. The fabric structure according to claim 1, wherein the base fabric is not a sheet-like woven structure.

8. The fabric structure according to claim 1, wherein the base fabric is a white base fabric, a checkered base fabric, or a black base fabric.

9. A manufacturing method of a fabric structure, comprising:
manufacturing a plurality of yarns into a base fabric through a spinning process, wherein each of the yarns is composed of a fiber; and
forming a coating layer on the base fabric, wherein the fiber and the coating layer do not comprise polyvinyl chloride.

10. The manufacturing method of the fabric structure according to claim 9, wherein the step of forming the coating layer comprises:
performing a granulation process to form a plurality of particles; and
melting to form the particles on the base fabric.
